# EUROPÄISCHE PATENTANMELDUNG

(11) **EP 0 586 912 A2**
(43) Veröffentlichungstag der Anmeldung: **16.03.1994**
(21) Anmeldenummer: 93112871.4
(22) Anmeldetag: 11.08.1993
(51) Int. Cl.: B05B 7/04, B05B 1/34, F01N 3/08, F01N 3/36, F01N 3/20, F23D 11/10

(54) **Zerstäuberdüse**

(30) Priorität: 08.09.1992 DE 4230054
(71) Anmelder: MAN Nutzfahrzeuge Aktiengesellschaft, 80976 München (DE)
(72) Erfinder: Kreutmair, Josef, Dipl.-Ing. (FH), D-85276 Pfaffenhofen (DE); Gaudermann, Robert, D-85764 Oberschleissheim (DE); König, Nikolaus, Dipl.-Ing. (FH), D-82294 Oberschweinbach (DE); Simpkin, David-Michael, Dipl.-Ing. (FH), D-85232 Bergkirchen (DE)

(57) **Zusammenfassung**

Für eine Mehrlochzerstäuberdüse (10) wird eine Zwischendüse (17) vorgeschlagen, mittels der der zerstäubte Brennstoff (21) beschleunigt gegen die als Prallplatte dienende austrittsseitige Stirnwand (22) der Düse (10) geschleudert und wodurch der Brennstoff an der Prallplatte radial gleichmäßig auseinandergezogen wird und ebenso gleichmäßig verteilt durch die Austrittslöcher (23) der Düse (10) austritt.

## Beschreibung

Die Erfindung bezieht sich auf eine Zerstäuberdüse mit einem Düsenkörper, der einen Mischraum einschließt und mehrere Austrittslöcher für ein Flüssigkeits/Luftgemisch aufweist und wobei eine Trennwand mit einer Zwischendüse vorgesehen ist, die den Mischraum in zwei Räume aufteilt, nach Patent DE 41 21 346.

Düsen bestehen in der Regel aus einem hohlzylindrischen Düsenkörper, an dessen einer Stirnseite die Eintrittsleitungen für die Zerstäuberluft und die Flüssigkeit, z. B. Brennstoff, angeschlossen sind und dessen andere Stirnseite als Prallplatte ausgebildet ist und etwa 5 Austrittslöcher hat, die kreissymmetrisch gleichmäßig verteilt sind. Die durch die Düse zu fördernde Kraftstoffmenge wird entsprechend dem Motorkennfeld eines Verbrennungsmotors geregelt.

Es hat sich herausgestellt, daß z. B. bei geringem Kraftstoffdurchsatz eine ungleichmäßige Verteilung aus den Austrittslöchern erfolgt. Bei liegender Anordnung der Zerstäuberdüse erfolgt eine stärkere Ablagerung von Kraftstoff im unteren Bereich des Düsenraumes, was bis zur "Verstopfung" der unteren Austrittslöcher führen kann.

Gemäß dem Hauptpatent wird dieser Nachteil durch die gattungsgemäße Ausführung behoben, die eine gleichmäßige Verteilung des aus der Düse austretenden Kraftstoff/Luftgemisches in jeder Betriebsphase gewährleistet.

Durch die Zwischendüse wird das Kraftstoff/Luftgemisch derart beschleunigt, daß der Kraftstoff auch bei geringen Massenströmen mit relativ hoher kinetischer Energie auf die Prallplatte gelangt und dort gleichmäßig auseinandergezogen wird. Durch die Anhebung der Geschwindigkeit wird der Einfluß der Schwerkraft auf den Kraftstoff nahezu ausgeschaltet. Das Kraftstoff/Luftgemisch gelangt auf diese Weise gleichmäßig verteilt zu den. Austrittslöchern und es wird somit ein gleichmäßiger Austritt aus der Zerstäuberdüse ermöglicht.

Erfindungsgemäß wird die Zerstäuberdüse der eingangs genannten Art auf Anwendungen ausgedehnt, bei denen Flüssigkeiten aller Art zu zerstäuben sind.

Aus der DE 419 233 ist eine Zerstäuberdüse für Flüssigkeiten bekannt, die einen Düsenaustritt und zwei durch eine weitere Öffnung in Verbindung stehende Räume aufweist. In den ersten Raum fließt die Flüssigkeit, die eine bis an die Öffnung hineinragende Druckgasdüse umspült. Das Druckgas drückt die Flüssigkeit in kleine Teilchen zerreißend durch die Öffnung in den eigentlichen Expansions- bzw. Mischraum der Zerstäuberdüse, von wo aus das Gemisch direkt zum Düsenaustritt gelangt. Durch die Anordnung des ersten flüssigkeitsgefüllten Raumes und der Druckgasdüse vor der Öffnung soll erreicht werden, daß die Gasstrahlenergie möglichst vollständig zur Zerstäubung der Flüssigkeit genutztwerden kann.

Gemäß der Erfindung wird dagegen eine Beschleunigung des Flüssigkeit-Gas-Gemisches bezweckt, indem das Gemisch nicht direkt sondern durch die Zwischendüse beschleunigt zum Düsenaustritt gelangt.

Die in der Trennwand etwa zentrisch angeordnete Düsenöffnung, die als Zwischendüse wirkt, hat vorzugsweise einen Querschnitt, der gleich der Summe der Querschnitte der Austrittslöcher ist.

Durch die erfindungsgemäße Maßnahme ist es möglich, mit einer Mehrloch-Zerstäuberdüse einen wesentlich größeren Regelbereich zu bestreiten, als es bisher möglich war, und zwar weil der Regelbereich für geringe Flüssigkeitsmengen bei der erfindungsgemäßen Düse keine Probleme bei der Zerstäubung und Verteilung bietet.

Gemäß einer weiteren Ausgestaltung der Erfindung erweitert sich der Misch- bzw. Expansionsraum von der Zwischendüse allmählich. Dieses kann in der Form eines Konus oder vorzugsweise durch stufenweise Erweiterung geschehen. Damit wird der Abriß der Flüssigkeit von der Wandung bewirkt. Die Stufenkanten begünstigen die Mikrowirbelbildung an der Wandung.

Auf diese Weise strömt das Gemisch ohne Anlagerung der Flüssigkeit an der Wand des Expansionsraumes zu den Düsenaustrittslöchern.

In der Zeichnung sind Ausführungsbeispiele der Erfindung schematisch dargestellt:
- Fig. 1 und 2: zeigen einen Längsschnitt bzw. eine Draufsicht einer ersten Mehrloch-Zerstäuberdüse 10 und
- Fig. 3: ein zweites Ausführungsbeispiel.

Die Düse 10 besteht aus einem hohlzylindrischen Düsenkörper 11, der einen Innenraum 12 umschließt, der mit der Zufuhrleitung 14 für eine Flüssigkeit 15 und Zerstäuberluft 16 in Verbindung steht. Die Flüssigkeit 15 wird mit der Zerstäuberdruckluft 16 in der Leitung 14 und im Expansionsraum 12 vermischt und zu einer Zwischendüse 17 gedrückt, die sich in einer den Expansionsraum 12 in zwei Räume 18 und 19 teilenden Trennwand 20 befindet. Aufgrund der Zwischendüse 17 wird der Flüssigkeit/Gasstrom 21 beschleunigt auf die als Prallplatte wirkende Austrittsstirnseite 22 der Düse 10 geführt und dabei radial auseinandergezogen.

Aufgrund der hohen kinetischen Energie des Flüssigkeit/Gasstromes 21 wird die Flüssigkeit/Gasmischung gleichmäßig radial aufgeteilt. Eine Einwirkung der Schwerkraft auf die Flüssigkeit in der Umgebung des Austrittsendes 22 der Düse 10 ist somit vernachlässigbar. Auf diese Weise lassen sich auch geringe Flüssigkeitsmengen gleichmäßig auf die Austrittslöcher 23 verteilen, die sich in der Austrittsstirnseite 22 der Düse 10 befinden.

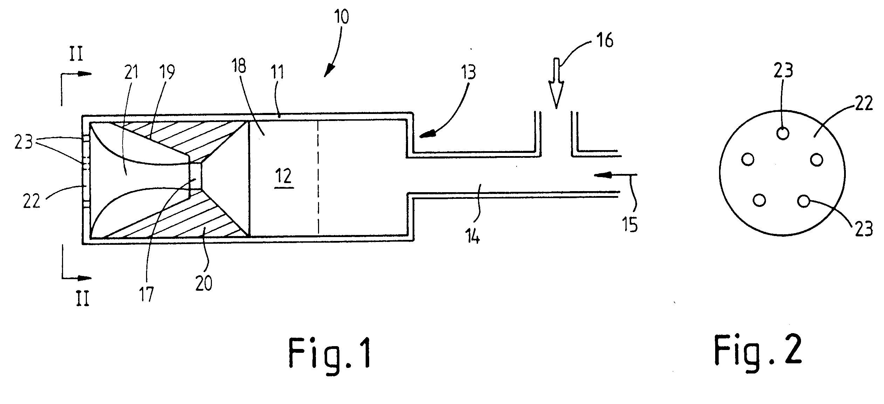

Die Trennwand 20 ist gemäß Fig. 1 beidseitig trichterförmig ausgebildet. Dadurch wird vermieden, daß sich Flüssigkeit in Winkeln und Wandungen ablagert. Durch den von der Zwischendüse 17 verjüngenden Querschnitt und den sich nach der Zwischendüse 17 allmählich erweiternden Querschnitt wird Flüssigkeit in Wandnähe vom Hauptstrom mitgerissen.

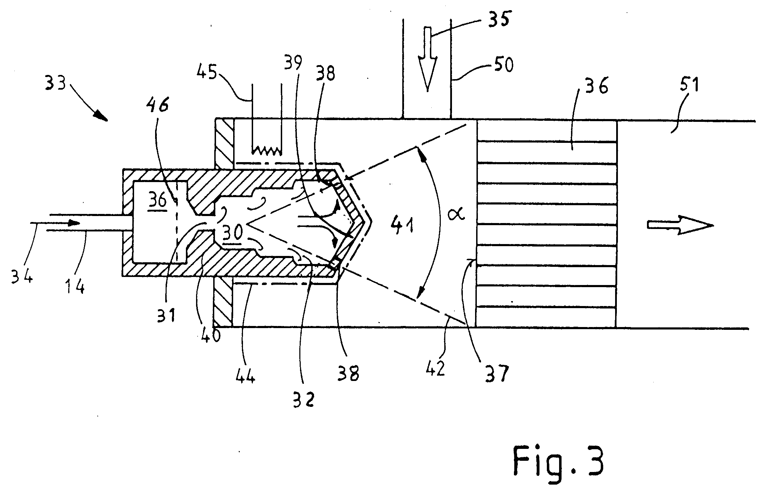

Der Abriß der Flüssigkeit im Expansionsraum 30 nach der Zwischendüse 31 kann gemäß Fig. 3 durch eine stufenweise Erweiterung des Raumes intensiviert werden. Mikrowirbel 32 sorgen zusätzlich für eine gute Vermischung der von der Wand getrennten Flüssigkeit mit der Flüssigkeit/Gas-Mischung.

Um einen gleichmäßigen Fluß der zerstäubten Flüssigkeit innerhalb der Düse 20 zu gewährleisten und andererseits die Wirkung der Zwischendüsenöffnung 17 in allen Regelbereichen zufriedenzustellen, wird eine Zwischendüsenöffnung 17 mit einem Querschnitt gewählt, der gleich der Summe der Querschnitte der Austrittslöcher 23 ist. Damit wird einerseits das Regelverhalten nicht gestört und andererseits ein gleichmäßiger Austritt des zerstäubten Kraftstoffes aus den Austrittslöchern 23 gewährleistet, auch bei sehr geringen Kraftstoffmengen.

In Fig. 3 ist ein Beispiel gezeigt, bei dem die Zerstäuberdüse 33 zur Einspritzung eines Reduktionsmittels 34 in ein Abgassystem 50, 51 verwendet wird. Das mit dem Reduktionsmittel vermischte Abgas 35 wird durch einen Katalysator 36 geführt, dessen Eintrittsfläche 37 den Austrittsöffnungen 38 der Zerstäuberdüse 32 gegenübersteht.

Für solche und ähnliche Anwendungen ist die Stirnseite 39 der Zerstäuberdüse 33 nicht eben sondern konisch, von außen gesehen, konvex ausgebildet. Durch die dadurch im Winkel α zueinanderstehenden Austrittslöcher 38 tritt das Zerstäubungsmittel 41 in Form eines Kegels 42 heraus. Damit kann eine gleichmäßige Verteilung des Reduktionsmittels über die Eintrittsfläche 37 des Katalysators 36 erreicht werden. Außerdem wird dadurch eine bessere Vermischung mit dem Abgas 35 oder im allgemeinen mit einem ruhenden und insbesondere strömenden Gas bewirkt.

Im ersten Expansionsraumteil 36 ist vor der Zwischendüse 31 ein Sieb 46 zur Unterstützung der gleichmäßigen Verteilung des Flüssigkeit/Gas-Gemisches und zum Zurückhalten von Teilchen und größeren Tröpfchen vorgesehen.

Bei Medien, die zu Ablagerungen neigen, ist die Zerstäuberdüse mit einer katalytischen Schicht 44 vorgesehen, die bei Bedarf von einer Heizeinrichtung 45 beheizbar ist.

## Patentansprüche

1. Zerstäuberdüse mit einem Düsenkörper (11, 33), der einen Expansionsraum einschließt und mehrere Austrittslöcher (23, 38) aufweist, und wobei im Expansionsraum eine Trennwand (20, 40) mit einer Zwischendüse (17, 31) vorgesehen ist, die den Expansionsraum in zwei Räume (18, 37) und (19, 30) aufteilt, gekennzeichnet durch die Anwendung der Zerstäuberdüse für andere Flüssigkeiten als Brennstoff.

2. Düse nach Anspruch 1, dadurch gekennzeichnet, daß die Trennwand (20) ein- oder beidseitig trichterförmig ausgebildet ist.

3. Düse nach Anspruch 1 oder 2, dadurch gekennzeichnet, daß der Querschnitt der Zwischendüse (17, 31) etwa so groß ist wie die Summe der Querschnitte der Austrittslöcher (23, 38) der Zerstäuberdüse (10, 33).

4. Düse nach Anspruch 1, dadurch gekennzeichnet, daß der Expansionsraumteil (30) in Strömungsrichtung nach der Zwischendüse (31) sich stufenweise erweitert.

5. Düse nach einem der vorhergehenden Ansprüche, dadurch gekennzeichnet, daß die Austrittslöcher (38) zur Bildung eines Zerstäubernebelkonus (42) in einem Winkel (α) zueinander angeordnet sind.

6. Düse nach einem der vorhergehenden Ansprüche, dadurch gekennzeichnet, daß die Düse (10, 33) mit einer Heizeinrichtung (45) ausgestattet ist.

7. Düse nach einem der vorhergehenden Ansprüche, dadurch gekennzeichnet, daß die Düse (10, 33) zumindest teilweise mit einer katalytischen Schicht (44) überzogen ist.
